Europäisches Patentamt

(19) European Patent Office

Office européen des brevets

(11) Publication number: **0 234 057**
**A1**

## (12) EUROPEAN PATENT APPLICATION

(21) Application number: 86202104.5

(22) Date of filing: 27.11.86

(51) Int. Cl.⁴: **C04B 28/04** , **E21B 33/13** ,
//(C04B28/04,22:00,22:12,22:14-,24:18)

(30) Priority: 20.12.85 FR 8519105

(43) Date of publication of application:
**02.09.87 Bulletin 87/36**

(84) Designated Contracting States:
**DE GB IT NL**

(71) Applicant: **Etudes et Fabrication Dowell Schlumberger**
**Z.I. Molina BP 90**
**F-42003 Saint-Etienne Cédex 01(FR)**

(72) Inventor: **Kieffer, Jacques**
**26, rue Michel Rondet**
**F-42230 Roche La Molière(FR)**
Inventor: **Michaux, Michel**
**10, rue Virgile**
**F-42100 Saint Etienne(FR)**
Inventor: **Chevignard, Paul**
**5, Hameau de Sorbiers**
**F-42290 Sorbiers(FR)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

(54) **Additives for combatting gelation in cement slurries for use in oilfield services, and corresponding methods of cementing.**

(57) The invention relates to the use of certain silicates, together with optional sulfates for combatting various forms of gelation in oilfield cements. A representative composition comprises 1% BWOC Na silicate, plus 1.75% BWOC Na sulfate.

EP 0 234 057 A1

## Additives for combatting gelation in cement slurries for use in oilfield services, and corresponding methods of cementing.

The present invention relates to cement slurries as used by oilfield services.

The invention relates more particularly to additives enabling premature gelation of such cement slurries to be avoided.

In numerous cases when using cements which are not of perfect quality, or whose qualities have become degraded during storage, problems are encountered concerning cement slurry gelation, and these problems may empirically be divided into two categories:

-Primary Gel: this gel occurs when the slurry is left to rest immediatly after mixing, and the appearance of this gel leads very rapidly to a cement slurry which cannot be pumped; and

-Secondary Gel: this gel forms as soon as the cement reaches a certain temperature while being stirred. This critical temperature is easily reached bottomhole and gelling can them appear quite suddenly during pumping.

Both primary and secondary gelling have severe effects on proceeding with the cementing work to be performed, and in many cases gelling simply leads to very bad cementing of the well or to make cementing impossible, with catastrophic consequences.

Such gelling is particularly worrying for the field engineer since it occurs in a random manner.

Cements which gel do not belong to any particular category or to any particular brand. As a general rule, gelling occurs in specific lots of poor quality which may result either from incidents during manufacture or from variations (which may very slight) during manufacture or else from transformations which occur during storage.

The person skilled in the art is well aware of these phenomena and of their random nature.

However, so far as we are aware, there are no effective solutions for solving the problems caused by gelling occuring in the cements used for cementing oil, gaz, geothermal, etc. wells.

According to the invention, certain quantities of soluble silicate(s) and optionally of soluble inorganic sulfate(s) are incorporated in the cement slurry.

This invention is applicable to salt-free slurries or to slurries having a low salt content, which are not of reduced weight (i.e. having a density of greater than about 1.5 s.g.). It is known that reduced weight slurries never suffer from the phenomenon of premature gelling. In contrast, it is also well known that slurries of normal density or of high density are particularly sensitive to the above-described phenomena.

Setting anomalies have been favorably studied by G. FRIGIONE in the book "Advances in Cement Technology" which is the reference work on the subject. Particular reference should be made to pages 498 to 500 for this topic.

In the table on page 499, and reproduced by way of reference in an Appendix to the present application, case I presents no gelling problems.

Case IV does not occur in oil field cements because of the presence in these cements of phases which are more reactive than $C_4AF$ ($CaO_4$, $Al_2O_3,Fe_2O_3$), e.g. $C_6A_2F$.

However, gelling phenomena are encountered in cases II and III.

It is shown in accordance with the invention that a simple and effective solution can be provided to most gelling phenomena by adding a small quantity of silicate(s), which may optionally be combined with a small quantity of sulfate(s). After long investigations, in particular concerning intersticial water and analysis of hydrated cement, the applicant has been able to establish the effectiveness of these additives.

Without wishing to be limited to any particular theory, it appears that silicates "poison" the surface of highly reactive aluminum phases. This function for silicates is completely original.

One of the surprising aspects of the invention as applied to a salt-free of a low-salt cement, is that the addition of a silicate does not give rise to instantaneous or "flash" setting even though this phenomenon could reasonably be feared by the persons skilled in the art. Another surprising element of the invention (if reference is made to the above-mentionned book) is that the addition of a sulfate does not give rise to gelation as could have been feared.

It is also surprising to observe that adding silicate(s) together with optional sulfate(s) in accordance with the invention does not change the behavior of a slurry lacking any natural tendancy to gellation, with the only observed change being accelerated setting, which change varies considerably from one cement to another. In order to compensate this secondary effect, it is only necessary to add a small quantity of retarder. This observation is particularly important since gelling is a random phenomenon (as mentionned above) and the practical advantage of the present invention would be practically nil (see Ex. II) if adding the additives specified by the invention were to have a significantly disturbing effect on the normal characteristics of a slurry lacking any natural tendancy to gelling.

It is thus possible for the persons skilled in the art and present on site to incorporate additives in accordance with the invention as soon as there is the slightest worry that a cement might gel.

It has been demonstrated the presence of silicate(s) as an additive in accordance with the invention is absolutely critical and necessary. The most suitable silicates are alkaline silicates.

However, the presence of sulfate(s) is not always absolutely essential for the invention. The addition of sulfate(s) also depends on the type of the cement, on its storage conditions, etc.. Simple routine tests as are commonly performed on site (rheological and setting time measurements) enable an engineer to decide whether this additive needs adding.

The following examples enable a person skilled in the art to select the best additive composition for use in accordance with the invention.

The use of a combination of one or more alkaline silicates and of one or more of alkaline sulfates is particularly recommended.

Sodium silicate and sodium sulfate are particularly useful.

The equalizer should also contain a suitable pourcentage of retarder. Particularly recommended retarters include lignosulfonates and their derivatives, organophospates and their derivatives, and certain known carboxylic acids. The preferred retarder is refined lignosulfonate which has been partially or completely de-sugared and which may optionally be re-sulfonated.

The quantity of retarder used should lie in the range:

$0 \leq$ retarder $\leq 1\%$ BWOC.

The additive concentrations should lie in the following ranges:

$0,2 \leq$ silicates $\leq 1\%$ BWOC / equ. $SiO_2$

$0 <$ sulfates $> 2\%$ BWOC / equ. $Na_2SO_4$

(BWOC = weight of cement)

The lower limit for silicate is about 0,2% BWOC.

It should also be observed that substances such as calcium sulfate are not suitable.

It thus appears that both the concentration and the selection of components is critical in accordance with the invention.

Cementing compositions in accordance with the invention are thus made from the following components:

-Cement;

-Mix water;

-Additive(s) in accordance with the invention ("Equalizer"); and

-Conventional additives.

Any convential hydraulic cement may be used, and in particular cements in API classes A, G, and H, or ASTM cements types I and II, and any of the PORTLAND cements used in this industry.

The mix water may be fresh water, sea water, and various comparable brines having a concentration of up to 15% NaCl by weight of water (at least).

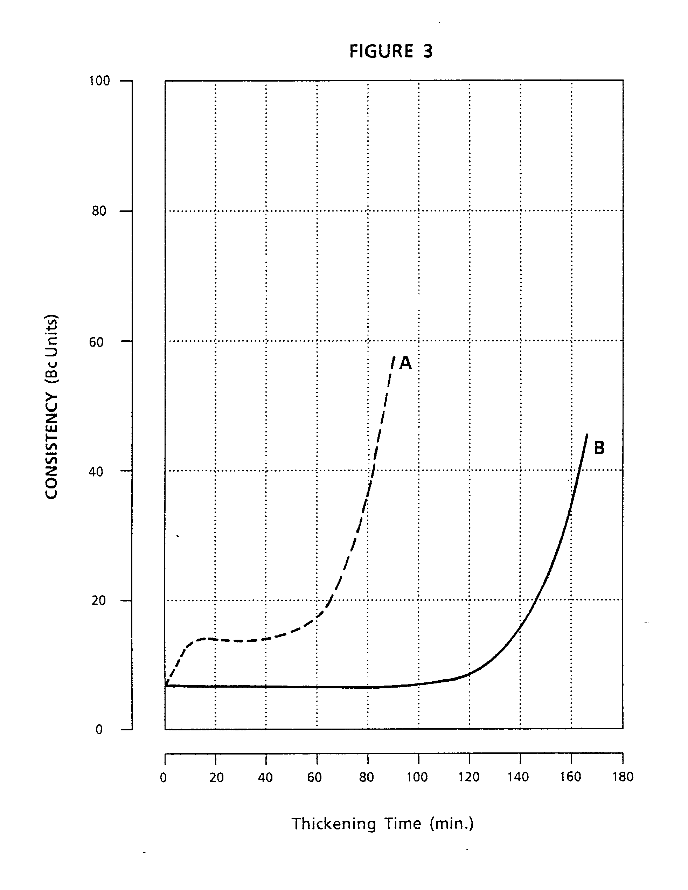

Accompanying Figure 3 shows setting time curves as a function of the nature of the mix water. These curves correspond to the following composition:

-Cement 1 (lot C-1061)

-0.1% BWOC lignosulfonate retarder

-Equalizer (2.75% BWOC);

. 1.0% silicate;

.1.75% sulfate;

-Mix water:

. curve (a) = sea water;

. curve (b) = fresh water containing 18% NaCl by weight of water;

-Test temperature: 185°F (85°C)

-Slurry density approximately 1.9.

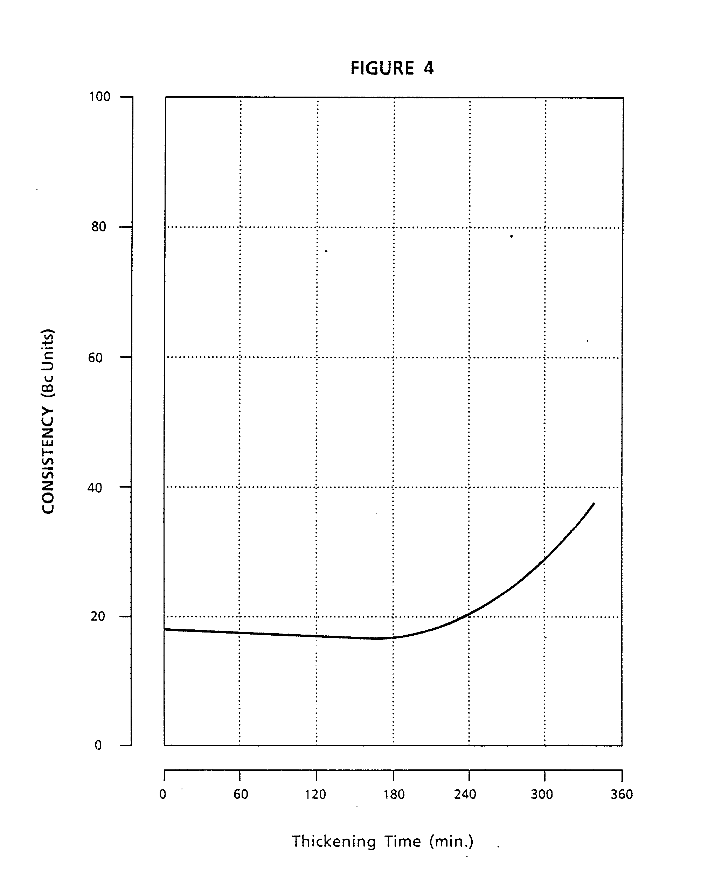

Accompanying Figure 4 shows verification in this respect of the fact that the above composition (where the mix water = water having 18% NaCl by weight of water) does not cause gelation (or only in insignificant thin layers) at low temperature (77°F; 25°C) either.

Finally, the conventional additives may comprise, for example: anti-foaming agents, retarder, accelerators, etc., and these additives are used in the usual concentration which are well known to persons skilled in the art.

The following examples illustrate the invention without limiting the scope thereof.

EXAMPLE 1:

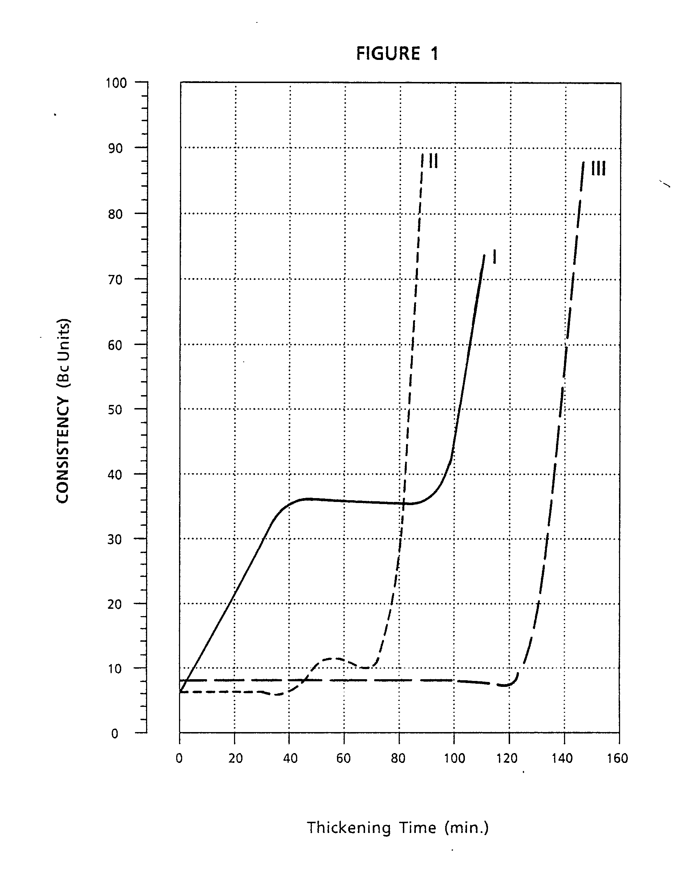

(This example relates to accompanying Figure 1).

This example use a cement 1 having a natural tendancy to gel (lot C-1061).

Curve I: cement + 0.1 % BWOC lignosulfonate retarder.

Curve II: as curve I + equalizer in accordance with the invention at 2.75%.

Curve III: as curve II except for 0.2% retarder.

(185°F/85°C; fresh water)

If reference is made to accompanying Figure 1, it can be seen that curve I has a plateau of secondary gelling at about 40Bc. Curve I shows that gelation disappears on adding 2.75% BWOC of equalizer in accordance with the invention and having the following composition:

-1.0% BWOC $Na_2SiO_3$, $5H_2O$

-1.75% BWOC $Na_2SO_4$

Finally, curve III shows that if a larger amount of retarder is added (0.2% BWOC), the setting time is easily adjusted without the reappearance of gelling.

EXAMPLE II:

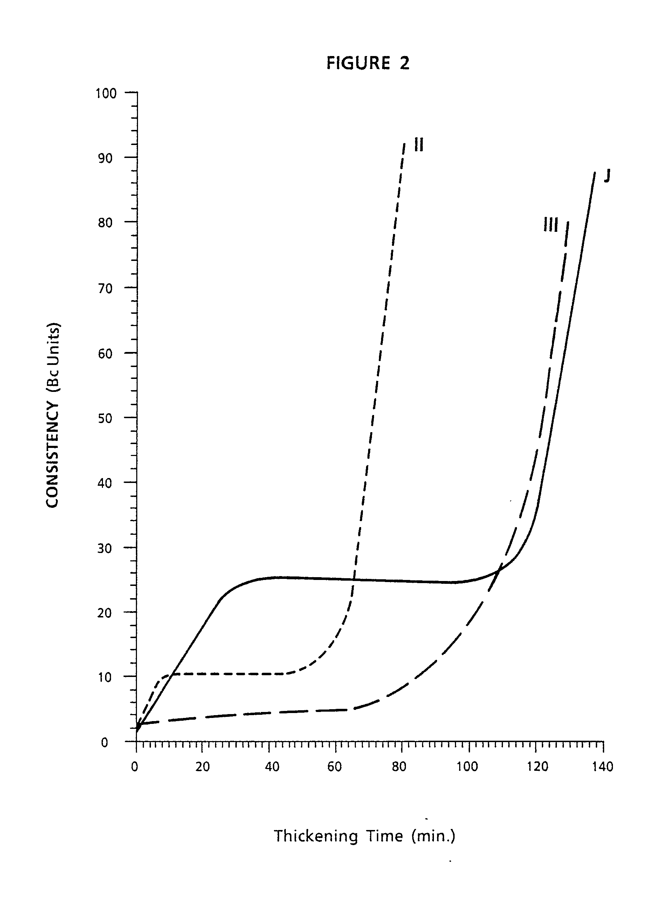

(This example corresponds to accompanying Figure 2)

Curve I: cement 2 (lot C-967) + 0.1% BWOC lignosulfonate retarder.

Curve II: as curve I + equalizer in accordance with the invention: 2.75% BWOC (1% BWOC silicate + 1.75% BWOC sulfate).

Curve III: as curve II but using cement 3 (lot C-1006) which is less sensitive to gelling.

(185°F/85°C; fresh water)

Curves I and II were plotted using a cement lot which had a natural tendancy to secondary gelling (lot C 967).

The secondary gel plateau visible in curve I has practically disappeared from curve II.

Curve III was plotted using a cement lot (lot C-1006) which had no natural tendancy to gelling: it can be seen that adding an equalizer in accordance with the invention to the same concentration as that used for curve II has no ill effect on the behavior of the cement.

EXAMPLE III:

Following table I summarizes rheology tests performed using different equalizer (EQ) formulations in accordance with the invention, after 20 minutes and using an atmospheric consistometer (API specification10).

Rheology improves when the the equalizer is used. The lowest shear yield value is obtained with equalizer EQ 1.

EXAMPLE IV variation in % silicate:

A. Following table II summarizes variations in setting time (TT) and in consistency as a function of silicate additive concentration, using cement 1 (lot C-1061).

Although the observed values may vary slightly from one type of cement to another, the maximum silicate concentration usable in its new function as an equalizer is considered to be about 1% BWOC.

B. Rheology: the tests were performed on a cement slurry having the following composition:

Cement: 1 (lot C-1061)

Retarder: 0.1% BWOC (Na. lignosulfonate)

Equalizer: 1.75% BWOC $Na_2SO$ + x% BWOC silicate.

4

The results after stirring for 20 minutes are summarized in following table III.

Observation of the corresponding curves (change of yield value as a function of x) confirms that the maximum concentration of silicate lies around 1% BWOC.

EXAMPLE V: Influence of the concentration of NaCl in the medium

a) test on a low salt medium:

Cement: 1(lot C-1061)
Retarder: 0.1% BWOC lignosulfonate;
Mix water: sea water.

This composition has a consistancy of 26 Bc after 20 minutes stirring at 185°F/85°C, and a setting time TT = 100 min.

If the same test is performed after adding the following equalizer: 1% BWOC silicate + 1.75% BWOC sulfonate to the above composition, the following results are obtained under the same conditions:
TT = 85 minutes
Consistency = 15 Bc.
(Fig. 3, curve A).

b) test on a medium having 18% by weight of water NaCl: see curve B Fig. 3.

Cement: 1 (lot C-1061)
Equalizer: 1% BWOC lignosulfonate + 1.75% BWOC sulfate;
Retarder: 0.1% BWOC lignosulfonate
Consistency: 7 Bc (Bearden units) after 20 minutes stirring at 185°F/85°C;
TT (setting time): 170 minutes.

If the same test is performed without an equalizer, a consistency of 25 Bc is obtained after 20 minutes stirring at 185°F/85°C, and the setting time (TT) is 200 minutes.

c) Test of a medium having 18% BWOC NaCl (BWOC = by weight of water) at 77°F/25°C.

Accompanying Figure 4 shows the effect of the equalizer at 77°F/25°C.
Composition:
Cement: 1 (lot C-1061)
Equalizer: 1% BWOC silicate; + 1.75% BWOC sulfate
Retarder: 0.1% BWOC lignosulfonate
Consistency: 18 Bc (Bearden units) after 20 minutes stirring at 77°F/25°C;
TT (setting time): 360 minutes.

EXAMPLE VI: Effect of the equalizer on various cements

The equalizer (EQ) used for this test had the following composition:
1.0% BWOC silicate + 1.75% BWOC sulfate.
The results are summarized in following table IV.

EXAMPLE VI: Effect of the equalizer on a cement suffering from the primary gel phenomenon.

Tests were performed using either Na silicate or Na sulfate. These tests show that the sulfate is necesary for solving primary gelling.
The results are summarized in the following table V.

## TABLE

| Cement | EQ No | Plastic Viscosity (cP) | Yield value (Pa) | Gel consistency after 10 min. (*) | |
|---|---|---|---|---|---|
| | | | | (a) | (b) |
| | - | 36 | 55.54 | 17 | 35 |
| lot C 1061 | 1 | 21 | 25.38 | 12.5 | 26 |
| + 0.1% BWOC | 2 | 36 | 45.96 | 12 | 25 |
| Retarder (+) | 3 | 22 | 31.12 | 11 | 23 |
| | 4 | 37 | 39.26 | 11.5 | 24 |
| Lot C 1061 | - | 40 | 38.30 | 12.5 | 26 |
| +0.1% BWOC Retarder (+) | 1 | 22 | 12.45 | 5.3 | 11 |

$1 \text{ cP} = 10^{-3} \text{ Pa.s}$

(*), (+): See note on next page.

NOTES for TABLE I:

%: all percentages are by weight of cement (BWOC)
EQ 1: Sodium sulfate 1.75%
+ $Na_2O, SiO_2, 5H_2O$ 1.0%
EQ 2: Sodium sulfate 1.75%
+ $Na_2O, 3SiO_2, 3H_2O$ 0.47%
EQ 3: Sodium sulfate 1.75%
+ $Na_2O, SiO_2, 5H_2O$ 0.5%
EQ 4: Sodium sulfate 1.75%
+ $Na_2O, SiO_2, 5H_2O$ 0.25%
(*) Measured using a FANN 35 viscosity meter (a) Pa (b) lbs/100 sq.ft.
(+) Retarder = calcium lignosulfonate
Equalizer composition EQ 1 is preferred because of the low yield value YV.

TABLE II

| Cement | Retarder (+)<br>%BWOC | Silicate<br>%BWOC | Consistency<br>(Bc) | TT<br>(min.) |
|---|---|---|---|---|
| 1-C-1061 | 0.1 | 0.25 | ·8 | 150 |
| 1-C-1061 | 0.1 | 0.50 | 5.70 | 120 |
| 1-C-1061 | 0.1 | 1 | 5.70 | 100 |
| 1-C-1061 | 0.1 | 2 | nearly flash-set | (1) |
| 1-C-1061 | 0.1 | 5 | flash-set | (2) |
| 1-C-1061 | 0.1 | 10 | flash-set | (3) |

Notes: (1) Start of setting: 20 min. (the slurry is no longer pumpable)

(2) 100 Bc at 40 min.;

(3) 100 Bc at 30 min.;

(+) Ca lignosulfonate or desulfated Ca lignosulfonate;

TT = setting time

Bc = Bearden consistency units.

TABLE III

| Silicate<br>(% by weight)<br>x/example IV | Yield Value<br>(Pa) | (YV)<br>(lbs/100sq.ft) |
|---|---|---|
| 0 | 55 (1) | 115 |
| 0.25 | 40 | 83 |
| 0.50 | 31 | 65 |
| 1 | 25 (2) | 53 |

Notes: (1) no dispersion

(2) no further improvement observed beyond 1%.

TABLE IV

| Cement No. | Consistency after 20 min. | Equalizer % BWOC | Setting time No equal. | with equal. |
|---|---|---|---|---|
| 5 | 4 | 2 | 2 h 58 min. | 1 h 32 min. |
| 6 | 0.5 | 0.5 | 4 h 46 min. | 50 min. |
| 7 | 11 | 0.5 | 3 h 17 min. | 2 h 27 min. |
| 4 | 2 | 0.5 | 3 h 23 min. | 3 h 04 min. |
| 8 | 14 | 10 | 2 h 30 min. | 1 h 20 min. |
| 9 | 9 | 0.5 | 2 h 45 min. | 1 h 20 min. |

BWOC: By weight of cement

TABLE V

| Composition | Consistency of gel after 10 minutes (Pa) | (lbs/100 sq.ft.) |
|---|---|---|
| Neat cement (cement + water) | > 143 | > 300 |
| Addition of silicate only (0.25% BWOC) | > 130 | 270 |
| Addition of sulfate only (1.75% BWOC) | 6.2 | 13 |

APPENDIX

* = Set

+ = pumpable

(a) = Ettringite recrystallistion →

(b) = Ettringite coating

(c) = Ettringite coating $C_4AH_{13}$ and monosulfate in the pores

(d) = Ettringite coating secondary gypsum in the pores.

A = Clinker reactivity

B = Sulfate available in solution

## Claims

1) Novel cement slurries for well cementing, and in particular for oil wells, the slurries being characterized in that they contain an "equalizer" additive for inhibiting any possible tendancy of the slurry to gelation, said equalizer additive comprising at least one silicate at a concentration lying in the range about 0.2% to 1% by weight of cement (BWOC).

2) Novel slurries according to claim 1, characterized in that the equalizer consists in one or more alkaline silicates, and in particular in sodium silicates.

3) Novel slurries according to claim 1 or 2, characterized in that they additionally contain a concentration of up to 2% BWOC of at least one sulfate.

4) Novel slurries according to any one of claims 1 to 3, characterized in that they contain as their equalizer:

-1% BWOC Na silicate (equ. $SiO_2$); and

-1.75% BWOC Na sulfate (equ. $Na_2SO_4$).

5) Novel cement slurries according to any one of claims 1 to 4, characterized in that the mix water is fresh water, sea water, or a water having up to about 18% by weight NaCl.

6) Novel cement slurries according to any,one of claims 1 to 5, characterized in that they additionally contain zero to about 1% BWOC retarder; in particular of the lignosulfonate type.

7) Novel "equalizers" additives for cement slurries, consisting in at least one silicate, together with an option of at least one sulfate, and in particular:

1.0 % BWOC silicate

+ 1.75 BWOC sulfate.

8) Novel equalizer additives according to claim 7, characterized in that they additionally containt zero and about 1% BWOC of retarder, in particular of the lignosulfonate type.

9) A method of cementing a well, and in particular an oil well, characterized in that the method consists in injecting a slurry according to any one of claims 1 to 6 into the well annulus.

## FIGURE 1

CONSISTENCY (Bc Units)

Thickening Time (min.)

FIGURE 2

FIGURE 3

CONSISTENCY (Bc Units)

Thickening Time (min.)

## FIGURE 4

CONSISTENCY (Bc Units)

Thickening Time (min.)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 547 189   (C.A. WILSON)<br><br>* Claim  1;  page  1,  lines 54-59,77-82 *<br><br>--- | 1,2,5, 9 | C 04 B    28/04<br>E 21 B    33/13  //<br>(C 04 B    28/04<br>C 04 B    22:00<br>C 04 B    22:12<br>C 04 B    22:14 |
| A | DE-C-  901 271   (M. PLEITHNER et al.)<br>* Whole document *<br><br>--- | 1,2,5, 9 | C 04 B    24:18 ) |
| A | EP-A-0 146 171   (DOWELL SCHLUMBERGER)<br>* Abstract;  page  3, lines 4-5; page 8, line 23 *<br><br>--- | 1,2,5, 6,9 | |
| A | US-A-4 263 365   (G.M. BURGESS et al.)<br>* Claim 9 *<br><br>--- | 3,4 | |
| | | | **TECHNICAL FIELDS SEARCHED (Int. Cl.4)** |
| A | GB-A-2 157 280   (DOW CHEMICAL)<br>* Claim 1 *<br><br>--- | 1,2 | C 04 B    28/00<br>C 04 B    22/00<br>E 21 B    33/00 |
| A | FR-A-2 345 406   (B.J. HUGHES INC.)<br>* Page 1, lines 31-35 *<br><br>----- | | |

The present search report has been drawn up for all claims

| Place of search | Date of completion of the search | Examiner |
|---|---|---|
| THE HAGUE | 27-03-1987 | DAELEMAN P.C.A. |